Europäisches Patentamt

European Patent Office

Office européen des brevets

(19)

(11) Publication number: **0 198 927**
**A1**

# EUROPEAN PATENT APPLICATION

published in accordance with Art. 158(3) EPC

(12)

(21) Application number: 85905235.9

(22) Date of filing: 22.10.85

Data of the international application taken as a basis:

(86) International application number:
PCT/JP85/00589

(87) International publication number:
WO86/02748 (09.05.86 86/10)

(51) Int. Cl.⁴: **G 05 B 19/403**

(30) Priority: 26.10.84 JP 225460/84

(43) Date of publication of application:
29.10.86 Bulletin 86/44

(84) Designated Contracting States:
DE FR GB

(71) Applicant: FANUC LTD.
3580, Shibokusa Aza-Komamba Oshino-mura
Minamitsuru-gun, Yamanashi 401-05(JP)

(72) Inventor: MATSUMURA, Teruyuki
38-8, Matsugaya
Hachioji-shi Tokyo 192-03(JP)

(72) Inventor: YUKUTOMO, Masashi
10-5, Nishihashimoto 1-chome
Sagamihara-shi Kanagawa 229(JP)

(74) Representative: Billington, Lawrence Emlyn et al,
HASELTINE LAKE & CO Hazlitt House 28 Southampton
Buildings Chancery Lane
London WC2A 1AT(GB)

(54) METHOD OF PREPARING NC DATA.

(57) A method of preparing NC data and, particularly, a method of preparing NC data for automatically determining the sequence of machining steps to obtain a finished shape from the data on material shapes (data on round bars, hollow round bars, or materials of special shapes) that are input. The NC data are prepared, according to which the sequence of machining steps for machining the material into a finished shape is stored in a memory (201) for each of the material shapes, the material shape to be used is input, the sequence of machining steps corresponding to the material shape that is input is read out from the memory (201), and the material is machined into a finished shape according to the sequence.

EP 0 198 927 A1

Fig. 1

204 205

MATERIALS
BLANK PROFILES
FINISHED PROFILES

208

OPERATOR'S PANEL

202

GRAPHIC DISPLAY

203

ROM    RAM

PROCESSOR

CYLINDER    P = 6
   (1) END FACE ROUGH CUTTING
   (2) OUTER DIAMETER ROUGH CUTTING
   (3) END FACE FINISHING
   (4) OUTER DIAMETER FINISHING
   (5) GROOVING
   (6) THREADING
HOLLOW CYLINDER   P = 9
   - - - - - - - - - -
SPECIAL PROFILE BLANK
   - - - - - - - - - -
TOOLING FILE
   - - - - - - - - - -
MATERIAL FILE
   - - - - - - - - - -
      - - - - - - - - - -

NON-VOLATILE MEMORY

201

NC DATA OUTPUT UNIT

206

207
EXTERNAL STORAGE MEDIUM

## DESCRIPTION

## NC DATA CREATION METHOD

Technical Field

This invention relates to a method of creating NC data, and more particularly to an NC data creation method for automatically determining a sequence of necessary machining processes from inputted blank profile data (data indicative of a cylinder, hollow cylinder or special profile blank).

Background Art

Automatic programming systems are available for creating NC tapes (NC data) from a design drawing through a simple operation by entering data in a conversational mode using a graphic display screen. For example, refer to the specification of U.S.P. 4,490,781. With such an automatic programming system, NC data (an NC tape) are created automatically if the necessary data are entered sequentially in accordance with the following steps:

(1) blank material selection step;

(2) drawing mode selection step;

(3) blank profile (chosen from among a cylinder, hollow cylinder and special profile blank) and profile dimensions input step;

(4) finished profile and finished profile dimensions input step;

(5) machine reference point and turret position input step;

(6)  process selection step;

(7)  tool selection step;

(8)  machining limits and cutting condition designation step; and

(9)  tool path calculation step.

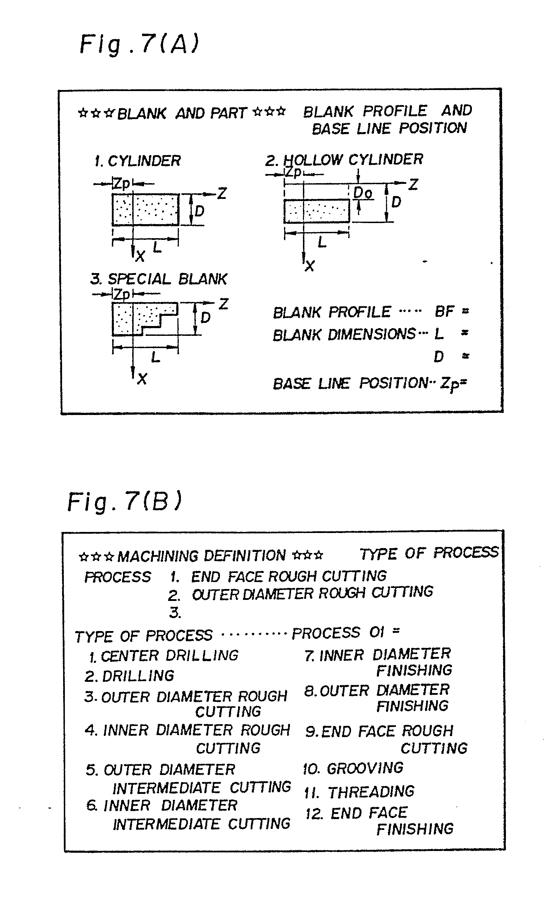

In the step for entering the blank profile and its dimensions, a picture for the blank profile and dimensions input appears on a graphic display screen, as shown in Fig. 7(A).  While viewing what is displayed, one enters the blank profile, its dimensional values L, D, $D_o$, and the position ZP of a base line.  Specifically, since the profiles of blanks to be subjected to turning machining are broadly classified into a cylinder, hollow cylinder and special profile blank, the pictures of these blanks and their menu numbers are displayed, as shown in Fig. 7(A), one of the blank profiles is selected by its menu number from among the displayed blank profiles.  This is followed by entering dimensional values, namely the length L, thickness D, bore diameter $D_o$ and base line position ZP of the blank. This completes the entry of the blank profile and dimensional values.

The steps (6) through (8) are repeated until the final finished profile is obtained.  Specifically, when it is turned for the machining process selection step, a prompt for selecting the machining process is displayed on the graphic display screen, as shown in Fig. 7(B). Accordingly, depending upon the machining process which is to be performed, one enters the name of the desired machining process, in the form of a menu number, from among those being displayed on the screen. Fig. 7(B) shows an example in which end face rough cutting and outer diameter rough cutting have been selected as first and second machining processes. If end face finishing is to be performed as the third machining process, menu number 12 is entered. This is followed by inputting the tool to be used in the entered machining process, as well as the cutting conditions, cutting direction and cutting area for the entered machining process. Thereafter, when a different area is to be cut with the same tool, this fact is entered. Also entered are the cutting direction and the area. On the other hand, if it is unnecessary to cut a different area with the same tool, an entry is made of this fact. Thus, when entry of data necessary for machining in accordance with the i-th machining process is completed, the operator decides whether a different machining process is required in order to obtain the final part profile; if one is, the fact is entered. Thereafter, if machining process selection, entry of data indicative of the tool to be used, and entry of cutting conditions, cutting direction and cutting area are carried out in the above fashion until the finished profile is obtained, then all the necessary data will have been entered. An automatic programming unit then creates NC data on the basis of the input data and causes a tool trajectory to be displayed on the graphic display screen, thus ending programming.

Thus, in the conventional method of creating NC data as set forth above, once the blank profile and finished profile have been entered, in which area machining is to be performed and by which machining process, and in which cutting direction the tool is to be moved for such cutting, are matters left to the programmer's judgment. The programmer also determines the machining process sequence and inputs the necessary data in this machining process sequence. This conventional method provides a high degree of flexibility since the programmer can freely set the machining process sequence and the areas to be machined. However, since considerable programmer judgment is required, programming is complicated, errors are likely to be made and programming requires a long period of time.

For these reasons, the applicant has proposed a novel machining process determination method in U.S. Serial No. 767,264 (filed on August 7, 1985). The proposed machining process determination method includes storing a standard sequence of machining processes in a memory beforehand, reading these previously stored machining processes out of the memory in order after entry of a blank profile and final part profile, discriminating based on the blank profile and final part profile whether the machining process is

-5-

required for obtaining a finished part, when this machining process is not required, performing identical discrimination processing upon reading the next machining process out of the memory, when the above machining process is required, determining a cutting domain and cutting direction of the machining process, and thereafter creating NC data upon reading subsequent machining processes out of the memory and performing identical processing. With this previously proposed method, however, a problem is encountered in machining efficiency in that it is not possible to determine the optimum machining process sequence for a blank profile.

Accordingly, an object of the invention is to provide an NC data creation method in which an optimum machining process sequence can be decided automatically for each and every part profile without requiring programmer judgment.

Disclosure of the Invention

An optimum machining process sequence is stored in memory beforehand to correspond to each type of blank profile. For example, assume that the blank profiles are a cylinder, hollow cylinder and special blank profile. For the cylinder, the machining process sequence would be (1) end face rough cutting, (2) outer diameter rough cutting, (3) end face finishing, (4) outer diameter finishing, (5) grooving and (6) threading. For the hollow cylinder, the machining process sequence would be (1) end face rough cutting,

(2) outer diameter rough cutting, (3) drilling, (4) inner diameter rough cutting, (5) end face finishing, (6) outer diamter finishing, (7) inner diameter finishing, (8) grooving and (9) threading. A machining process sequence would similarly be decided for the special blank profile. These machining process sequences are stored in memory beforehand. A machining process sequence conforming to a specified blank profile is then read out of the memory and NC data for performing cutting in the machining process order are automatically creating using separately entered profile dimension values, finished profile and finished profile dimensions.

## Brief Description of the Drawings

Fig. 1 is a block diagram of an NC data creation system for realizing the present invention;

Fig. 2 is a view for describing machining of a cylinder;

Fig. 3 is a view for describing machining of a hollow cylinder;

Fig. 4 is a flowchart of processing according to the present invention;

Figs. 5 and 6 are views for describing processing according to the invention for the case of a cylinder; and

Fig. 7 is a view for describing a conventional method of creating NC data.

## Best Mode for Carrying Out the Invention

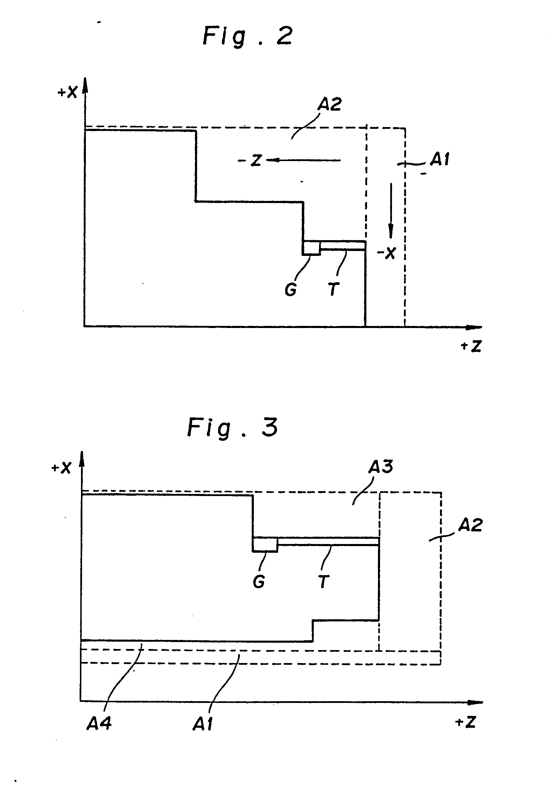

In a case where a blank profile has the shape (cylindrical) indicated by the dashed line in Fig. 2 and the finished profile has the shape indicated by the solid line in Fig. 2 (where G is a grooved portion and T is a threaded portion), the necessary data generally are entered sequentially in such a manner that the blank is machined into the finished profile in the following order:

(1)  end face rough cutting (portion A1 in Fig. 2);

(2)  outer diameter rough cutting (portion A2 in Fig.2);

(3)  end face finishing;

(4)  outer diameter finishing;

(5)  grooving; and

(6)  threading.

The finished profile for the case where the blank is a cylinder substantially has the shape shown in Fig. 2, with the only difference being the number of stepped portions, threads and grooves. Accordingly, in performing turning machining using a cylinder as the blank, all conceivable cases are covered by the machining process sequence set forth above.

If the blank profile is that of a hollow cylinder, as shown by the dashed line in Fig. 3, then the finished profile has the shape indicated by the solid lines in the same drawing and can be obtained through the following machining sequence:

(1)   drilling (portion Al in Fig. 3);

(2)   end face rough cutting (portion A2 in Fig. 3);

(3)   outer diameter rough cutting (portion A3 in Fig. 3);

(4)   inner diameter rough cutting (portion A4 in Fig. 3);

(5)   end face finishing;

(6)   outer diameter finishing;

(7)   inner diameter finishing;

(8)   grooving; and

(9)   threading.

The finished profile for the case where the blank is a hollow cylinder substantially has the shape shown in Fig. 3, with the only difference being the number of stepped portions, threads and grooves.  Accordingly, in performing turning machining using a hollow cylinder as the blank, all conceivable cases are covered by the machining process sequence set forth above.

A finished profile can be obtained in a similar manner through a predetermined machining process sequence for a special blank profile as well.

Thus, in the present invention, an optimum machining process sequence for turning machining is registered in memory to correspond to each blank profile, and data (tool used, cutting conditions, cutting domain, cutting direction) required in each machining process are decided in the order of the machining processes that correspond to an already entered blank profile, thereby dispensing with the need for the operator to decide the machining processes. Note that if it is so prearranged that a cutting area can be automatically created from the blank profile and finished profile and the cutting direction is one in which the tool approaches the chuck (the -X or -Z direction), then such a prearrangement will enable the cutting area to be created automatically. Further, the tool used and the cutting conditions can be determined automatically by storing a tooling file and material file in memory beforehand.

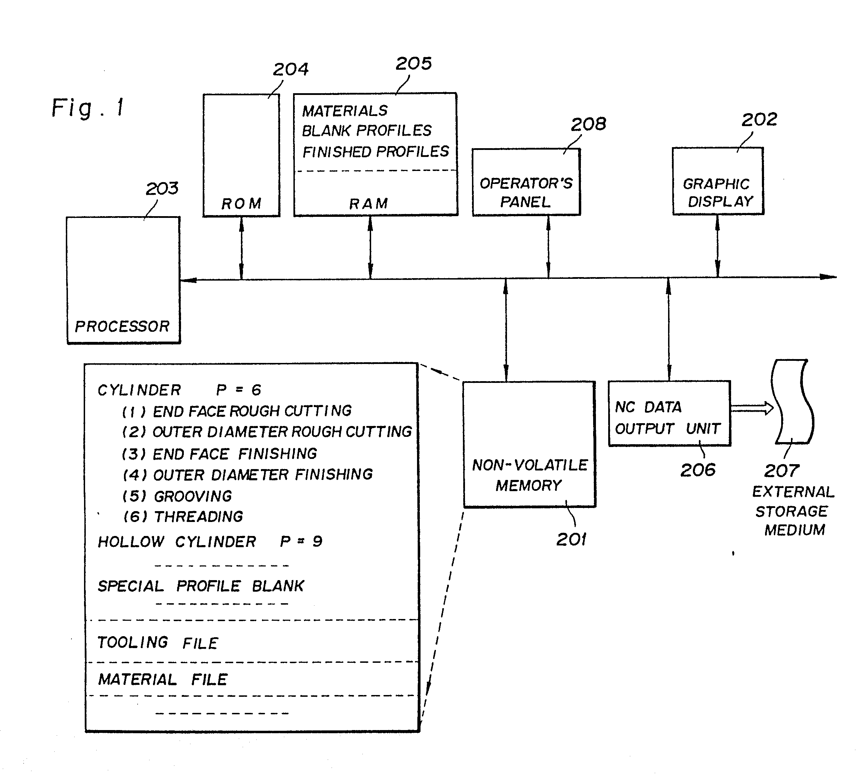

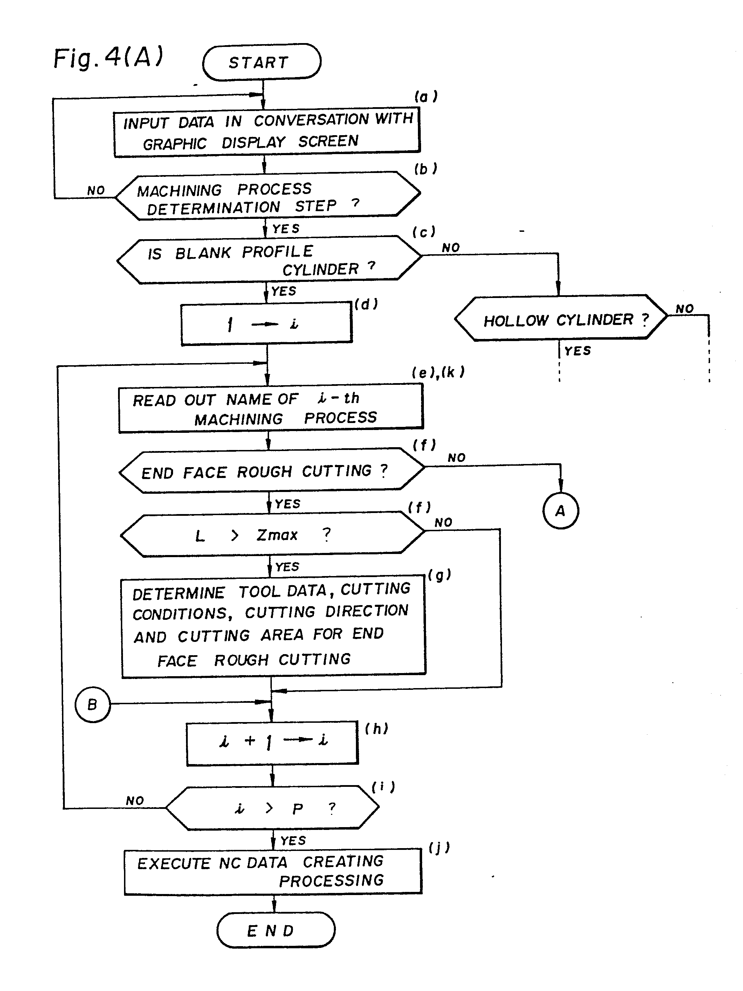

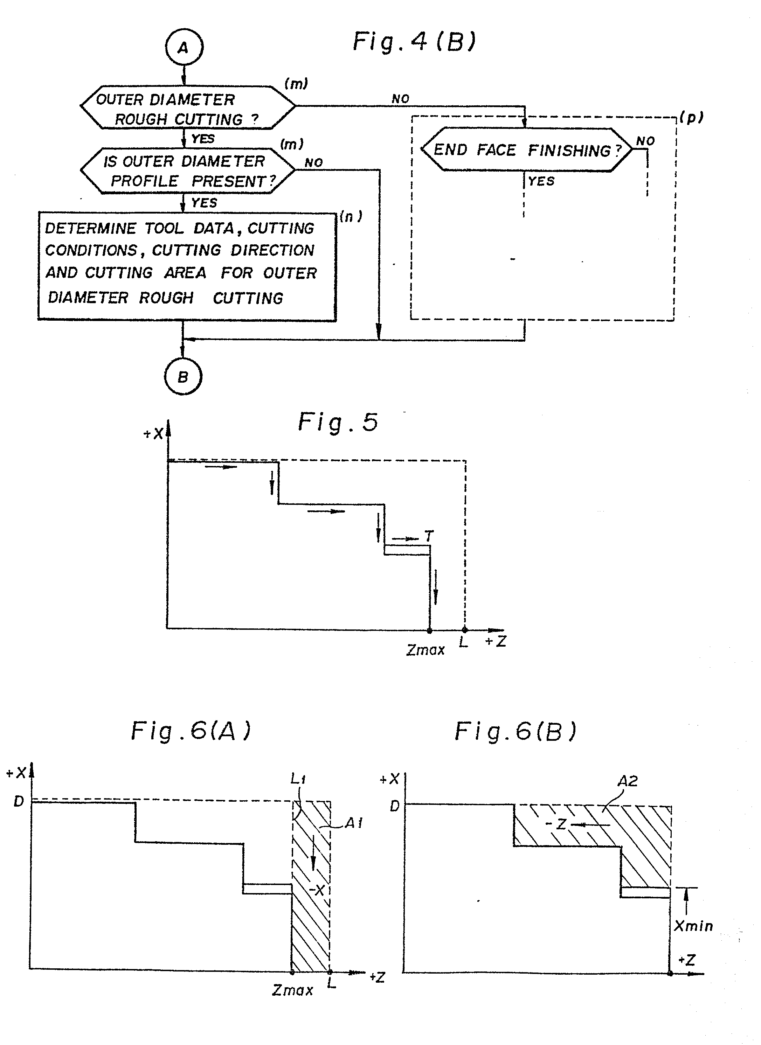

Fig. 1 is a block diagram showing an embodiment of an NC data creation system according to the invention, and Fig. 4 is a flowchart of processing according to the invention.

In Fig. 1, numeral 201 denotes a non-volatile memory in which are previously stored a machining process sequence and a number P of machining processes corresponding to each blank profile (cylinder, hollow cylinder and special profile). A tooling file and a material file are also stored in the memory. An example of a machining process sequence for a case where the profile is a cylinder is as follows:

(1) end face rough cutting;

(2) outer diameter rough cutting;

(3) end face finishing;

(4) outer diameter finishing;

(5) grooving; and

(6) threading.

The number P of machining processes is six.  If the profile is a hollow cylinder, the machining process sequence would be as follows:

(1) end face rough cutting;

(2) outer diameter rough cutting;

(3) drilling;

(4) inner diameter rough cutting;

(5) end face finishing;

(6) outer diameter finishing;

(7) inner diameter finishing;

(8) grooving; and

(9) threading.

P is nine in this case.  Note that since the optimum machining process sequence for a special blank will differ depending upon the profile thereof, the user decides the optimum machining process sequence based on the profile of the special blank used and registers the sequence in memory.  However, it is also permissible to register a general machining process sequence beforehand as the machining process sequence for the special blank.

Numeral 202 designates a graphic display unit, 203 a processor, 204 a ROM storing a control program, 205 a RAM for storing entered data, the results of processing and created NC data, 207 an NC data output unit for delivering created NC data to an external memory medium 207 such as a paper tape or bubble cassette, and 208 an operator's panel.

(a)    As in the conventional method, the blank material, format of the design drawing, profile and dimensional values of the blank, finished profile and its dimensional values, machine reference point and turret index position are entered from the operator's panel 208 in a conversation with the graphic display screen.   These are stored in the RAM 205.  We will assume that the blank profile is a cylinder and that the finished profile is that illustrated by the dashed line in Fig. 5.   The finished profile is specified by pressing profile symbol keys and an alphabetic character key on the operator's panel 208 in the sequence

$$\longrightarrow \ \downarrow \ \longrightarrow \ \downarrow \ \longrightarrow \ T \ \downarrow$$

and entering a dimensional value of a finished profile element each time a profile symbol key and alphabetic character key are pressed.   Note that the letter T signifies a threaded portion.   (For a groove, the letter G would be used.)

(b)    The processor 203 checks whether the prevailing state is that for machining sequence determination.   If this is the case, the program proceeds to step (c).

(c)    The processor 203 refers to the blank profile data inputted at step (a) and stored in the RAM 205 and checks whether the blank is a cylinder, hollow cylinder or special profile blank.

(d)  If the blank profile is a cylinder, the processor 203 performs the operation $1 \longrightarrow i$.

(e)  Next, the processor reads the name of the i-th machining process for the cylinder out of the memory 201.

(f)  If the i-th machining process is end face rough cutting, the processor 203 goes to the finished profile data, which are stored in the RAM 205, to obtain the maximum value $Z_{max}$ of the finished profile along the + Z axis and compares the magnitude of $Z_{max}$ with the magnitude of the dimensional value L of the blank along the Z axis, which value has already been inputted to the RAM as the dimension of the blank.

(g)  If the result of the comparison is

$$Z_{max} < L$$

then it is decided that end face rough cutting is a machining process needed to obtain the finished profile, and the name of this machining process is displayed on the screen of the graphic display 202. The tool used and the cutting conditions are determined by using the tooling file and material file.  Next, the processor 203 recognizes that the area Al [see Fig. 6(A)] bounded by a straight line Ll at $Z = Z_{max}$ and by the blank profile is an area to be cut by end face rough cutting, and stores the chuck direction (along the -X axis) in the RAM 205 as the cutting direction. The shape remaining after removal of the cutting area Al is the blank profile.  The blank profile is displayed in the form of a dashed line and the finished profile in the form of a solid line, as shown in Fig. 6(B).

(h)  Thereafter, or when end face rough cutting is unnecessary because $Z_{max} = L$ holds at the step (f), the processor 203 performs the operation

$$i + 1 \longrightarrow i$$

(i)  Next, it is determined whether

$$i > P$$

holds.

(j)  If i > P holds, the processor 203 takes this as indicating that processing for determining the necessity of all of the preregistered machining processes and for creating the required data has been completed.  The processor then proceeds to execute NC data creation processing.

(k)  If $i \leq P$ holds, on the other hand, the processor 203 reads the name of the i-th machining process out of the memory 201.

(m)  If the i-th machining process is outer diameter rough cutting, then the processor 203 checks the finished profile data stored in RAM 205 and checks for the presense of a profile indicating an outer diameter portion.  It should be noted that determining whether a profile of an outer diameter portion exists is done by obtaining the maximum value $X_{max}$ of the end face in the X direction from the part profile data and comparing the magnitude of $X_{max}$ with that of the

-14-

dimensional value D of the blank in the X direction. Thus, if $D > X_{max}$ holds, a profile of an outer diameter portion exists and outer diameter cutting is required. If $D = X_{max}$, then a profile of an outer diameter does not exist and outer diameter cutting is unnecessary.

(n) If a profile of an outer diameter exists and outer diameter rough cutting is the machining process necessary to obtain the final part profile (finished profile), the name of the machining process is displayed on the display screen, the tool used, cutting conditions, cutting direction and cutting area are determined, and processing from step (h) onward is repeated. It should be noted that the area A2 [see Fig. 6(B)] bounded by the line indicating the external shape of the blank and the line indicating the external shape of the part is an area to be cut by outer diameter rough cutting, and that the chuck direction (-Z direction) is the cutting direction.

(p) Thereafter, and in a similar manner, discrimination processing for determining whether a machining process is necessary in order to obtain the finished profile and, if the the process is necessary, automatic creation processing for the tool, cutting conditions, cutting area and cutting direction used in executing the machining process, are performed sequentially for end face rough cutting, outer diameter finishing, grooving and threading until the relation $i > P$ is established.

If the blank profile in step (c) is the hollow cylinder or special profile, processing substantially similar to that for the cylinder is executed, the only difference between the machining process sequence that is read out of memory.

Note that whether grooving is required is determined by whether a G code is contained in the finished profile data, and that whether thread cutting is required is determined by whether a T code is contained in the part profile data. Further, whether or not an inner diameter profile exists is determined by obtaining a minimum value $X_{min}$ of the end face in the X direction from the part profile data and checking whether $X_{min}$ is equal to 0. Specifically, if $X_{min} > 0$ holds, an inner diameter profile exists and drilling or inner diameter rough cutting is necessary. If $X_{min} = 0$ holds, an inner diameter profile does not exist and neither drilling nor inner diameter rough cutting is required.

When the foregoing processing is completed for all of the preregistered machining processes in the above manner, the processor 203 creates NC data based on entered or automatically created data and stores the NC data in RAM 205.

According to the present invention as described above, an optimum machining process sequence is stored in memory beforehand to correspond to each type of blank profile, and a machining process sequence corresponding to a blank profile is read out of the memory and NC data for cutting the blank into a finished profile in accordance with the sequence are created. This makes it possible to determine an optimum machining process sequence automatically. Further, according to the invention, NC data can be created through a simple operation since it is no longer necessary to decide the machining process needed to obtain a finished profile or to decide and enter a sequence of machining processes one at a time on the basis of operator judgment. Furthermore, since the tool used, the cutting conditions, the cutting direction and the cutting area can be determined automatically, processing for creating NC data, in combination with the method of automatically determining machining processes in accordance with the invention, is greatly facilitated. Accordingly, even a beginner is capable of creating NC data in simple fashion without error. Moreover, the time needed for creating the NC data can be shortened.

CLAIMS:

1. A method of creating NC data, characterized by:

correlating a sequence of machining processes, which are necessary for machining a blank into a finished profile, with each of a variety of blank profiles and storing the sequences in memory beforehand;

inputting a blank profile to be used;

reading a sequence of machining processes corresponding to said inputted blank profile out of memory; and

creating NC data for machining the blank into the finished profile in accordance with said sequence.

2. A method of creating NC data according to claim 1, characterized in that said blank profiles are a cylinder, a hollow cylinder and a special profile.

3. A method of creating NC data according to claim 2, characterized in that when a blank profile is the cylinder, said sequence of machining processes is (1) end face rough cutting, (2) outer diameter rough cutting, (3) end face finishing, (4) outer diameter finishing, (5) grooving and (6) threading.

4. A method of creating NC data according to claim 2, characterized in that when a blank profile is the hollow cylinder, said sequence of machining processes is (1) end face rough cutting, (2) outer diameter rough cutting, (3) drilling, (4) inner diameter rough cutting, (5) end face finishing, (6) outer diameter finishing, (7) inner diameter finishing, (8) grooving and (9) threading.

**Fig. 1**

CYLINDER     P = 6
   (1) END FACE ROUGH CUTTING
   (2) OUTER DIAMETER ROUGH CUTTING
   (3) END FACE FINISHING
   (4) OUTER DIAMETER FINISHING
   (5) GROOVING
   (6) THREADING
HOLLOW CYLINDER   P = 9

SPECIAL PROFILE BLANK

TOOLING FILE

MATERIAL FILE

204 — ROM
205 — MATERIALS / BLANK PROFILES / FINISHED PROFILES — RAM
208 — OPERATOR'S PANEL
202 — GRAPHIC DISPLAY
203 — PROCESSOR
201 — NON-VOLATILE MEMORY
206 — NC DATA OUTPUT UNIT
207 — EXTERNAL STORAGE MEDIUM

0198927

0198927

## Fig . 2

## Fig . 3

Fig. 4(A)

```
                        ┌─────────────┐
                        │    START    │
                        └──────┬──────┘
                               │
              ┌────────────────▼──────────────────┐ (a)
              │ INPUT DATA IN CONVERSATION WITH    │
        ┌────▶│ GRAPHIC DISPLAY SCREEN             │
        │     └────────────────┬──────────────────┘
        │                      │
        │          ┌───────────▼────────────┐ (b)
        │   NO     │  MACHINING  PROCESS     │
        └──────────│  DETERMINATION STEP ?   │
                   └───────────┬────────────┘
                            YES│
                   ┌───────────▼────────────┐ (c)        NO
                   │  IS BLANK PROFILE       │──────────────────┐
                   │         CYLINDER ?      │                  │
                   └───────────┬────────────┘                  │
                            YES│                                │
                     ┌─────────▼─────────┐ (d)    ┌─────────────▼────────┐        NO
                     │     1 → i         │        │  HOLLOW CYLINDER ?   │──────────
                     └─────────┬─────────┘        └──────────┬───────────┘
        ┌──────────────────────┤                          YES│
        │          ┌───────────▼────────────┐ (e),(k)
        │          │ READ OUT NAME OF i-th   │
        │          │ MACHINING  PROCESS      │
        │          └───────────┬────────────┘
        │                      │
        │          ┌───────────▼────────────┐ (f)      NO
        │          │ END FACE ROUGH CUTTING ?│──────────────┐
        │          └───────────┬────────────┘              ▼
        │                   YES│                          ┌───┐
        │          ┌───────────▼────────────┐ (f)   NO    │ A │
        │          │    L  >  Zmax  ?        │──────┐     └───┘
        │          └───────────┬────────────┘      │
        │                   YES│                    │
        │   ┌──────────────────▼──────────────┐ (g) │
        │   │ DETERMINE TOOL DATA, CUTTING     │     │
        │   │ CONDITIONS, CUTTING DIRECTION    │     │
        │   │ AND CUTTING AREA FOR END         │     │
        │   │ FACE ROUGH CUTTING               │     │
        │   └──────────────────┬──────────────┘     │
        │  ┌───┐                │◀───────────────────┘
        │  │ B │────────────────┤
        │  └───┘                │
        │          ┌────────────▼───────────┐ (h)
        │          │      i + 1 → i          │
        │          └────────────┬───────────┘
        │                       │
        │   NO     ┌────────────▼───────────┐ (i)
        └──────────│      i  >  P  ?         │
                   └────────────┬───────────┘
                             YES│
                   ┌────────────▼───────────┐ (j)
                   │ EXECUTE NC DATA CREATING│
                   │ PROCESSING              │
                   └────────────┬───────────┘
                        ┌───────▼──────┐
                        │     END      │
                        └──────────────┘
```

## Fig. 4 (B)

(A)

OUTER DIAMETER
ROUGH CUTTING ? — (m) — NO

YES

IS OUTER DIAMETER
PROFILE PRESENT ? — (m) — NO

YES

DETERMINE TOOL DATA, CUTTING
CONDITIONS, CUTTING DIRECTION
AND CUTTING AREA FOR OUTER
DIAMETER ROUGH CUTTING — (n)

END FACE FINISHING ? — NO — (p)

YES

B

## Fig. 5

## Fig. 6(A)

## Fig. 6(B)

## Fig. 7(A)

☆☆☆ BLANK AND PART ☆☆☆     BLANK PROFILE AND
                            BASE LINE POSITION

1. CYLINDER                 2. HOLLOW CYLINDER

3. SPECIAL BLANK

BLANK PROFILE ····· BF =

BLANK DIMENSIONS··· L  =

                    D  =

BASE LINE POSITION·· $Z_p$=

## Fig. 7(B)

☆☆☆ MACHINING DEFINITION ☆☆☆     TYPE OF PROCESS

PROCESS   1. END FACE ROUGH CUTTING
          2. OUTER DIAMETER ROUGH CUTTING
          3.

TYPE OF PROCESS ·········· PROCESS 01 =

1. CENTER DRILLING                7. INNER DIAMETER
                                     FINISHING
2. DRILLING
                                  8. OUTER DIAMETER
3. OUTER DIAMETER ROUGH              FINISHING
          CUTTING
                                  9. END FACE ROUGH
4. INNER DIAMETER ROUGH              CUTTING
          CUTTING
                                  10. GROOVING
5. OUTER DIAMETER
   INTERMEDIATE CUTTING           11. THREADING

6. INNER DIAMETER                 12. END FACE
   INTERMEDIATE CUTTING               FINISHING

## INTERNATIONAL SEARCH REPORT

International Application No. PCT/JP85/00589

| I. CLASSIFICATION OF SUBJECT MATTER (if several classification symbols apply, indicate all) [3] |
|---|

According to International Patent Classification (IPC) or to both National Classification and IPC

Int. Cl$^4$     G05B 19/403

**II. FIELDS SEARCHED**

| Minimum Documentation Searched [4] | |
|---|---|
| Classification System | Classification Symbols |
| IPC | G05B 19/18-19/42 |

| Documentation Searched other than Minimum Documentation<br>to the Extent that such Documents are Included in the Fields Searched [5] |
|---|

| Jitsuyo Shinan Koho | 1926 – 1986 |
| Kokai Jitsuyo Shinan Koho | 1971 – 1986 |

**III. DOCUMENTS CONSIDERED TO BE RELEVANT [14]**

| Category* | Citation of Document, [16] with indication, where appropriate, of the relevant passages [17] | Relevant to Claim No. [18] |
|---|---|---|
| X | JP, A, 56-164405 (Mitsubishi Electric Corp.), 17 December 1981 (17. 12. 81), Page 3, upper left column, line 4 to upper right column, line 5, (Family: none) | 1 – 4 |

\* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| January 10, 1986 (10. 01. 86) | January 20, 1986 (20. 01. 86) |

| International Searching Authority [1] | Signature of Authorized Officer [20] |
|---|---|
| Japanese Patent Office | |

Form PCT/ISA/210 (second sheet) (October 1981)